# EUROPÄISCHE PATENTSCHRIFT

(11) **EP 4 026 516 B1**
(45) Veröffentlichungstag und Bekanntmachung des Hinweises auf die Patenterteilung: **05.07.2023**
(21) Anmeldenummer: 21150711.6
(22) Anmeldetag: 08.01.2021
(51) Int. Cl.: A61C 13/34, A61C 13/01, A61C 9/00

(54) **MODULARES ÜBUNGSMODELL ZUM ERLERNEN VON ZAHNMEDIZINISCHEN FERTIGKEITEN, ANORDNUNG EINES MODULAREN ÜBUNGSMODELLS AN EINEM PHANTOMKOPF, SYSTEM AUS EINEM OBERKIEFER UND EINEM UNTERKIEFER, SOWIE VERFAHREN ZUM ZUSAMMENBAU EINES MODULAREN ÜBUNGSMODELLS**
MODULAR TRAINING MODEL FOR LEARNING DENTAL SKILLS, ARRANGEMENT OF A MODULAR TRAINING MODEL ON A PHANTOM HEAD, SYSTEM OF AN UPPER JAW AND A LOWER JAW, AND METHOD FOR ASSEMBLING A MODULAR TRAINING MODEL
MODÈLE MODULAIRE D'APPRENTISSAGE DESTINÉ À L'APPRENTISSAGE DES COMPÉTENCES DENTAIRES, AGENCEMENT D'UN MODÈLE MODULAIRE D'APPRENTISSAGE SUR UNE TÊTE FANTÔME, SYSTÈME D'UN MAXILLAIRE SUPÉRIEUR ET D'UN MAXILLAIRE INFÉRIEUR, AINSI QUE PROCÉDÉ D'ASSEMBLAGE D'UN MODÈLE MODULAIRE D'APPRENTISSAGE

(43) Veröffentlichungstag der Anmeldung: 13.07.2022
(73) Patentinhaber: Tegtmeyer, Karsten, 48153 Münster (DE); Hanafi, Ashraf, 45473 Mülheim an der Ruhr (DE)
(72) Erfinder: Tegtmeyer, Karsten, 48153 Münster (DE); Hanafi, Ashraf, 45473 Mülheim an der Ruhr (DE)
(74) Vertreter: Patentanwälte Bauer Vorberg Kayser

(56) Entgegenhaltungen:
- EP-A1- 3 669 820
- EP-A2- 2 789 310

## Beschreibung

Die Erfindung betrifft ein modulares Übungsmodell zum Erlernen von zahnmedizinischen Fertigkeiten gemäß Anspruch 1. Ferner betrifft die Erfindung eine Anordnung eines solchen modularen Übungsmodells an einem Phantomkopf gemäß Anspruch 10 sowie ein System aus einem ersten modularen Übungsmodell in Form eines Oberkiefers und einem zweiten modularen Übungsmodell in Form eines Unterkiefers gemäß Anspruch 11. Außerdem betrifft die Erfindung ein Verfahren zum Zusammenbau eines modularen Übungsmodells gemäß Anspruch 12.

Modulare Übungsmodelle zum Erlenen von zahnmedizinischen Fertigkeiten sind aus dem Stand der Technik hinreichend bekannt. Anhand von solchen Übungsmodellen kann die Behandlung von Patienten demonstriert und erprobt werden. In der Regel dienen die Übungsmodelle zum Erlenen von zahnmedizinischen Fertigkeiten im Bereich der konservierenden Zahnheilkunde und Endodontie, der Prothetik und Zahntechnik, der Dentalhygiene und Parodontologie, der Oralchirurgie, der Kinderzahnheilkunde oder der zahnärztliche Radiologie und Orthodontie. Beispiele für Übungsmodelle sind in EP 2 789 310 A2 und EP 3 669 820 A1 beschrieben.

Die bekannten Übungsmodelle sind jedoch üblicherweise nur für einen begrenzten Umfang der gesamten vorstehenden Palette an zahnmedizinischen Fertigkeiten geeignet bzw. lassen sich oft nur einzelne Fertigkeiten daran demonstrieren oder erproben. Entsprechend werden für das Erlenen von Fertigkeiten, welche stark interdisziplinär sind, mehrere unterschiedliche Übungsmodelle benötigt.

Daher ist es die zugrundeliegende Aufgabe der Erfindung, ein modulares Übungsmodell zur Verfügung zu stellen, welches einen möglichst universellen Einsatz erlaubt und an welchem zahnmedizinische Fertigkeiten aus möglichst vielen Gebieten demonstriert und erlernt werden können. Das modulare Übungsmodell soll die Nachbildung unterschiedlichster Variationen von Kiefer- und Zahnmorphologien ermöglichen und dies unter Berücksichtigung tatsächlicher anatomischer Strukturen.

Die Lösung der Aufgabe erfolgt erfindungsgemäß mit den Merkmalen der unabhängigen Ansprüche. Weitere praktische Ausführungsformen und Vorteile sind in Verbindung mit den abhängigen Ansprüchen beschrieben.

Ein erfindungsgemäßes Übungsmodell zum Erlernen von zahnmedizinischen Fertigkeiten umfasst dabei eine Trägerplatte mit ersten Befestigungsmitteln zur Befestigung mindestens eines Abschnitts eines Kiefers. Ferner weist mindestens ein Abschnitt des Kiefers zu den ersten Befestigungsmitteln korrespondierende zweite Befestigungsmittel auf. Bei dem Abschnitt des Kiefers kann es sich dabei um einen Abschnitt des Oberkiefers oder des Unterkiefers handeln. Weiterhin weist das Übungsmodell eine Bodenplatte zur Auflage des mindestens einen Abschnitts des Kiefers auf. Der mindestens eine Abschnitt des Kiefers ist dann mit den zweiten Befestigungsmitteln zwischen der Bodenplatte und der Trägerplatte fixiert.

Die Trägerplatte und die Bodenplatte bilden dabei die "Basis" des Übungsmodells und ermöglichen, wie im Folgenden noch im Detail erläutert, die Anbindung und Ausbildung einer Vielzahl von weiteren Elementen, welche jeweils an die entsprechenden zu erlernenden Fähigkeiten angepasst werden können. Durch den modularen Aufbau kann das Übungsmodell flexibel konfiguriert werden: so sind nur die Trägerplatte und die Bodenplatte für jedes Übungsmodell einheitlich und ermöglichen es, die weiteren Komponenten individuell zu fertigen und mit dem Übungsmodell zu verbinden.

Die Trägerplatte ist insbesondere in einer Draufsicht trapezförmig ausgebildet. An der trapezförmigen Trägerplatte können die Abschnitte des Kiefers entsprechend einer realen (hufförmigen) Kieferstruktur angeordnet werden. Die einzelnen Abschnitte sind insbesondere jeweils entlang einer Seite des Trapezes angeordnet.

In einer praktischen Ausführungsform des modularen Übungsmodells sind die Bodenplatte und die Trägerplatte formschlüssig miteinander verbunden. Die formschlüssige Verbindung ist insbesondere dadurch realisiert, dass die Trägerplatte an der zu der Bodenplatte weisenden Unterseite mindestens einen Vorsprung und insbesondere zwei Vorsprünge aufweist. Der mindestens eine Vorsprung ist insbesondere zylindrisch und vorzugsweise sich nach unten verjüngend ausgebildet. Der mindestens eine Vorsprung weist mindestens eine Verdickung auf. Die Verdickung kann dabei umlaufend um den gesamten Umfang des Vorsprungs ausgebildet sein oder die Verdickung ist nur abschnittsweise ausgebildet. Beispielsweise kann die Verdickung durch einen elastischen Gummiring realisiert sein, denkbar ist auch eine Verdickung aus Kunststoff. Korrespondierend dazu weist die Bodenplatte eine Aussparung mit einer Nut auf. Der mindestens eine Vorsprung an der Trägerplatte kann dann in einer Steckrichtung in die Aussparung eingeführt werden und die Verdickung rastet in der Nut ein. Die formschlüssige Verbindung ist insbesondere lösbar, wobei die Verdickung, der Vorsprung und/oder ein Teil der Bodenplatte elastisch ausgebildet ist. Insgesamt lassen sich die Trägerplatte und die Bodenplatte durch einfaches Ineinanderstecken bzw. Ineinanderklicken einfach formschlüssig miteinander verbinden. Es sind keine weiteren Verbindungsmittel, wie zum Beispiel Schrauben, notwendig, um die Trägerplatte und die Bodenplatte miteinander zu verbinden und insbesondere auch die Abschnitte des Kiefers zu fixieren.

Der mindestens eine Abschnitt des Kiefers liegt insbesondere auf der Bodenplatte auf und ist unterseitig von der Bodenplatte begrenzt. Der mindestens eine Abschnitt des Kiefers ist insbesondere nach dem Zusammenstecken der Bodenplatte und der Trägerplatte klemmend zwischen der Trägerplatte und der Bodenplatte fixiert.

Um den Abschnitt des Kiefers mit der Trägerplatte zu verbinden, sind insbesondere als erste Befestigungsmittel an den Seitenflächen der Trägerplatte Aussparungen ausgebildet und an dem Abschnitt des Kiefers als zweite Befestigungsmittel jeweils dazu korrespondierende Vorsprünge. Die Vorsprünge sind in zusammengebautem Zustand in die Aussparungen hineinragend angeordnet.

Vorzugsweise sind die Aussparungen auf der Unterseite der Trägerplatte trapezförmig ausgebildet und die Vorsprünge sind korrespondierend dazu trapezförmig ausgebildet, zur Bildung einer Schwalbenschwanzverbindung. In diesem Fall werden die Abschnitte des Kiefers von unten mit den Vorsprüngen in die Aussparungen eingeführt und sind in einer Richtung senkrecht dazu gegenüber einem seitlichen Lösen aus der Trägerplatte formschlüssig fixiert. Die Fixierung des Abschnitts des Kiefers in vertikaler Richtung erfolgt durch das Verbinden der Trägerplatte und der Bodenplatte.

Je nach Form der Befestigungsmittel an der Trägerplatte und korrespondierend dazu an dem Abschnitt des Kiefers, ist auch eine einstückige Ausbildung von Trägerplatte und Bodenplatte denkbar. Hierbei wird dann der Abschnitt des Kiefers in horizontaler Richtung mit den Vorsprüngen in die Öffnungen in der Trägerplatte geschoben.

In einer weiteren praktischen Ausführungsform des erfindungsgemäßen Übungsmodells kann es sich bei dem Abschnitt des Kiefers um einen Quadranten, einen Sextanten oder einen vollständigen Kiefer (Unterkiefer oder Oberkiefer) handeln. Dadurch, dass der Kiefer abschnittsweise befestigt und entsprechend auch nur einzelne Abschnitte für die zu übenden Fertigkeiten individuell angepasst werden können, ist das Übungsmodell besonders flexibel.

Das erfindungsgemäße Übungsmodell kann weiterhin mindestens eine Zahnfleischauflage für den mindestens einen Abschnitt des Kiefers aufweisen. Die Zahnfleischauflage überzieht dabei den Abschnitt des Kiefers und einen Teil der Trägerplatte wie eine Maske. Die mindestens eine Zahnfleischauflage ist zwischen der Bodenplatte und der Trägerplatte klemmend fixiert. Die Zahnfleischauflage wird zwischen dem zusammengesetzten Kiefer und der Bodenplatte eingeklemmt. Insbesondere weist die Trägerplatte dazu einen sich zumindest über den Teil ihrer Unterseite erstreckenden Absatz auf, in welchem das Ende der Zahnfleischauflage eingeführt werden kann. Eine umlaufende Nut befindet sich am Kieferunterrand, in der die Zahnfleischauflage unterschnittig einzieht. Diese einfache und bedarfsweise Fixierung der Zahnfleischauflage ermöglicht es, neben Fertigkeiten am Kiefer auch Fertigkeiten in Bezug auf das Zahnfleisch zu erlernen.

Die Zahnfleischauflauflage kann nicht nur einlagig, sondern insbesondere auch mehrlagig ausgebildet sein und Lagen zur Nachbildung der Gingiva, des Bindegewebes und der Faszie aufweisen, sodass eine möglichst große Variabilität zum Erlernen zahnmedizinischer Fertigkeiten zur Verfügung gestellt werden kann.

Weiterhin kann die Oberseite der Trägerplatte eine Aussparung aufweisen. Die Aussparung kann dabei verschiedene Funktionen erfüllen: zum einen kann die Aussparung zur Fixierung des Übungsmodells an einem Phantomkopf dienen und/oder es kann eine Zunge oder ein Gaumenanteil in dieser Aussparung fixiert werden.

Insbesondere ist die Aussparung hexagonal und es kann eine Mutter in der Aussparung aufgenommen werden. Die Mutter dient als Gegenstück für eine Schraube, welche zur Befestigung an einem Phantomkopf dient. Die Mutter ist vorzugsweise als M6 Mutter ausgeführt, die mit einer zugehörigen M6 Schraube zusammenwirkt. Ein Phantomkopf ist eine Nachbildung eines menschlichen Kopfes, der zu Übungs- und Unterrichtszwecken dient und eine Mundhöhle aufweist, in welcher dann ein erfindungsgemäßes Übungsmodell angeordnet werden kann.

Das Übungsmodell kann auch um ein Modell einer Zunge (für einen Unterkiefer) oder ein Modell eines Gaumenanteils (für einen Oberkiefer) erweitert werden. Die Zunge oder der Gaumenanteil sind insbesondere in der vorstehend erwähnten (hexagonalen) Aussparung fixiert. Die Fixierung erfolgt vorzugsweise formschlüssig analog zu der Befestigung der Trägerplatte und der Bodenplatte, wobei ein an der Zunge oder dem Gaumenteil ausgebildeter Vorsprung in der Aussparung in der Trägerplatte angeordnet wird, bzw. in die Aussparung eingesteckt wird. Der Formschluss kann wieder über eine Verdickung, bzw. einen elastischen Ring erfolgen. Auch hier lassen sich Zunge oder Gaumenanteil durch leichtes Stecken einfach und schnell lösbar in dem Übungsmodell fixieren.

In einer weiteren praktischen Ausführungsform des erfindungsgemäßen Übungsmodells ist zudem mindestens ein Zahn vorgesehen, welcher innerhalb des mindestens einen Abschnitts des Kiefers fixiert ist. Entsprechend kann das Übungsmodell auch zum Erlernen von zahnmedizinischen Fähigkeiten an Zähnen dienen und das potenzielle Anwendungsspektrum wird weiter erweitert. Weiterhin können erfindungsgemäß durch die Auswahl des passenden Harzes mittels additiver Fertigungsverfahren auch radiologisch darstellbare Zähne realisiert werden. Die Anzahl an Zähnen kann jeweils frei gewählt werden.

Die Fixierung des Zahnes in einem Abschnitt des Kiefers erfolgt dabei durch eines oder mehrere der folgenden Varianten:
a) Der Zahn weist eine umlaufende oder abschnittsweise ausgebildete Verdickung auf, welche mit einer korrespondierenden Nut in dem Abschnitt des Kiefers zusammenwirkt. Der Zahn kann somit einfach in den korrespondierenden Abschnitt des Kiefers eingeklickt werden.
b) Der Zahn weist eine Aussparung auf, in welche ein in dem Abschnitt des Kiefers angeordnetes Sperrelement, z.B. ein zylindrischer Bolzen, hinein verschiebbar ist.
c) Der Zahn ist mit einer basalen Schraube im Abschnitt des Kiefers befestigt. Diese Art der Befestigung ist insbesondere bei Zähnen sinnvoll, welche keine Wurzel aufweisen.

Es ist auch denkbar, die vorstehenden Varianten zu kombinieren. Zum Beispiel kann ein gemäß Variante a) befestigter Zahn durch eine seitlich verschiebbare Platte gemäß Variante b) zusätzlich fixiert werden.

Die fixierten Zähne können darüber hinaus so fixiert werden, dass sie definierte Mobilitätsgrade aufweisen, entsprechend der geltenden Klassifikation für Zahnlockerungen:
Grad 0: keine abnorme Beweglichkeit
Grad 1: gerade fühlbare Beweglichkeit
Grad 2: sichtbare Beweglichkeit
Grad 3: beweglich auf Lippen-/Zungendruck, auch in axialer Richtung.

Der mindestens eine Zahn kann zudem verschiedene Lagen aufweisen, insbesondere Lagen zur Bildung von Schmelz, Dentin und/oder Pulpa.

Das modulare Übungsmodell kann erfindungsgemäß in einer weiteren praktischen Ausführungsform in einem Abschnitt des Kiefers einen Hohlraum aufweisen, der eine Verbindung zu einem Zahnfach umfasst. Der entsprechende Hohlraum kann mit einem Elektrolyten gefüllt werden, um damit eine endometrische Längenbestimmung durchzuführen.

Die Erfindung betrifft auch eine Anordnung eines wie vorstehend beschriebenen modularen Übungsmodells an einem Phantomkopf, wobei die Bodenplatte und die Trägerplatte gemeinsam mittels eines Fixierungsmittels an dem Phantomkopf fixiert sind. Insbesondere durchragt eine Schraube sowohl die Bodenplatte als auch die Trägerplatte. Als Gegenstück zur Befestigung dient eine in der Aussparung auf der Oberseite der Trägerplatte angeordnete Mutter. Bei einer Befestigung am Phantomkopf wird zudem die Verbindung zwischen Trägerplatte und Bodenplatte verstärkt und entsprechend die Klemmkraft der klemmenden Verbindung zur Fixierung eines Abschnittes des Kiefers und ggf. einer Zahnfleischauflage erhöht.

Der Phantomkopf hat ein bewegliches Unterteil zur Simulation des Unterkiefers. Somit können sich Ober- und Unterkiefer Zahnreihen bei Artikulation berühren, der Oberkiefer und er Unterkiefer sind somit indirekt über den Phantomkopf miteinander verbunden.

Die Erfindung betrifft ferner ein System aus einem ersten modularen Übungsmodell zur Bildung eines Oberkiefers und einem zweiten modularen Übungsmodell zur Bildung eines Unterkiefers.

Ein erfindungsgemäßes Verfahren zum Zusammenbau bzw. zur Montage eines wie vorstehend beschriebenen modularen Übungsmodells umfasst folgende Verfahrensschritte: an einer Trägerplatte mit ersten Befestigungsmitteln wird mindestens ein Abschnitts eines Kiefers mit zu den ersten Befestigungsmitteln korrespondierenden zweiten Befestigungsmitteln angeordnet und die Trägerplatte wird mit einer Bodenplatte formschlüssig verbunden. Je nach Ausgestaltung der ersten Befestigungsmittel und der dazu korrespondierenden zweiten Befestigungsmittel wird der Abschnitt des Kiefers von der Unterseite der Trägerplatte in diese eingesteckt, zum Beispiel zur Herstellung einer Schwalbenschwanzverzahnung. In diesem Fall werden die Bodenplatte und die Trägerplatte erst nach Anordnung des mindestens einen Abschnitts des Kiefers formschlüssig verbunden.

Alternativ kann der Abschnitt des Kiefers auch horizontal mit der Trägerplatte verbunden werden, wenn die Vorsprünge seitlich in die in der Trägerplatte ausgebildeten Öffnungen eingeschoben werden können.

Vor dem Verbinden von Trägerplatte und Bodenplatte kann der mindestens eine Abschnitt des Kiefers mit einer Zahnfleischauflage überzogen werden und die Zahnfleischauflage wird durch das Verbinden von Trägerplatte und Bodenplatte zwischen der Trägerplatte und der Bodenplatte klemmend fixiert.

Zur Erweiterung des Übungsmodells wird in den Kiefer mindestens ein Zahn und/oder eine Zunge und/oder ein Gaumenanteil eingesetzt und fixiert. Verschiedene Möglichkeiten der Fixierung sind vorstehend bereits in Zusammenhang mit dem Übungsmodell beschrieben.

Eine besonders große Bandbreite an modularen Übungsmodellen kann realisiert werden, wenn der mindestens eine Abschnitt des Kiefers, die Zahnfleischauflage der mindestens eine Zahn, die Zunge und/oder der Gaumenanteil individuell mittels additiven Fertigungsverfahren hergestellt werden. Insbesondere kann mittels des additiven Fertigungsverfahren die Darstellung knöcherner Strukturen (Substantia corticalis, Substantia spongiosa), nervaler Strukturen (z.B. N. mandibunlaris), dentaler Strukturen (Zahnschmelz, -bein, -zement, und -pulpa) mit beliebigen Pathologien (z.B. Zysten, Abszesse, kariöse Läsionen) realisiert werden. So kann je nach zu erlernender Fertigkeit oder je nach Art der Demonstration ein passgenaues Übungsmodell realisiert werden. Insbesondere wird die Vorlage für die additive Fertigung nach Vorbild einer CT-Aufnahme bzw. einer Digitalen Volumentomografien DVT erstellt.

Die Erfindung ermöglicht auch den Einsatz eines Computerprogrammproduktes, beispielsweise für einen Dozenten, wobei die einzelnen Komponenten, wie ein Abschnitt des Kiefers, die Zahnfleischauflage, eine Zunge, ein Gaumenanteil und/oder ein Zahn am Bildschirm konfiguriert werden können und anschließend mittels additiver Fertigungsverfahren hergestellt werden können.

Ein wesentlicher Vorteil der Erfindung besteht auch darin, dass anatomische Strukturen auch auf bereits am Markt befindliche Zahnmodelle übertragen werden können.

Weitere praktische Ausführungsformen und Vorteile sind in Verbindung mit den Figuren beschrieben. Es zeigen:
- Fig. 1: ein erfindungsgemäßes Übungsmodell gemäß einer ersten Ausführungsform in einer Explosionsansicht,
- Fig. 2: eine Trägerplatte in einer Draufsicht,
- Fig. 3: die Trägerplatte aus Fig. 2 in einer Ansicht von unten,
- Fig. 4: die Trägerplatte aus den Fig. 2 und 3 in einer perspektivischen Ansicht von schräg oben,
- Fig. 5: die Trägerplatte aus den Fig. 2 bis 4 in einer Seitenansicht,
- Fig. 6: ein Übungsmodell in einem Querschnitt,
- Fig. 7: ein System aus einem ersten Übungsmodell und einem zweiten Übungsmodell in einem Querschnitt,
- Fig. 8: eine Anordnung eines Zahns in einem Abschnitt des Kiefers mit einer ersten Variante der Befestigung,
- Fig. 9: eine Anordnung eines Zahns in einem Abschnitt des Kiefers mit einer zweiten Variante der Befestigung,
- Fig. 10: eine Anordnung eines Zahns in einem Abschnitt des Kiefers mit einer dritten Variante der Befestigung, und
- Fig. 11: eine Anordnung eines Zahns in einem Abschnitt des Kiefers mit einer vierten Variante der Befestigung.

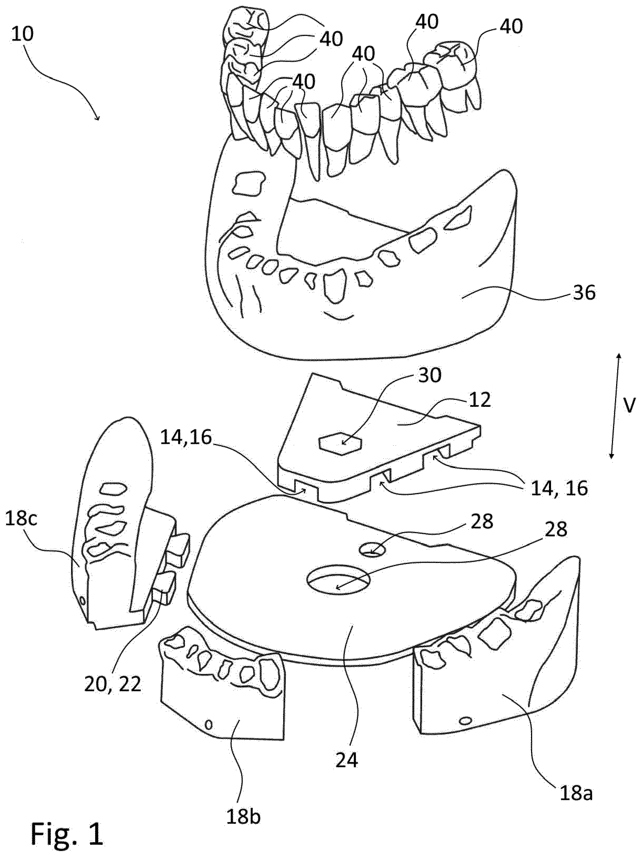

In Fig. 1 ist ein modulares Übungsmodell 10 zum Erlenen zahnmedizinischer Fertigkeiten mit verschiedenen Komponenten in einer Explosionsdarstellung gezeigt.

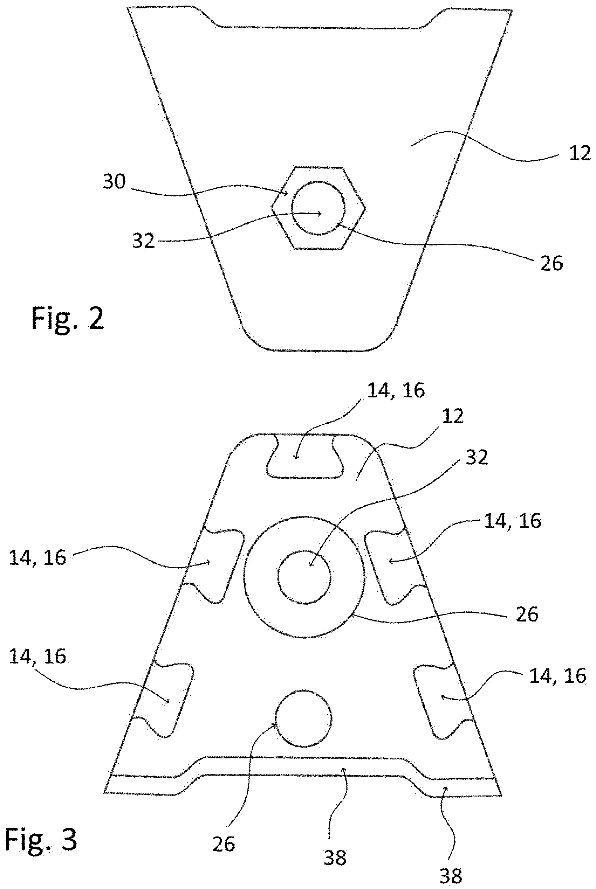

Das modulare Übungsmodell 10 umfasst eine Trägerplatte 12. Die Trägerplatte 12 ist auch in den Fig. 2 bis 4 gezeigt. Die Trägerplatte 12 ist in einer Draufsicht trapezförmig ausgebildet.

Die Seitenflächen und die Unterseite der Trägerplatte 12 weisen als erste Befestigungsmittel 14 dienende Aussparungen 16 auf. Wie gut in Fig. 3 erkennbar ist, erstrecken sich diese Aussparungen trapezartig, nach Art eines Schwalbenschwanzes, entlang der Unterseite der Trägerplatte 12.

Die ersten Befestigungsmittel 14 dienen zur Befestigung mindestens eines Abschnitts eines Kiefers 18a, 18b, 18c an der Trägerplatte 12. Wie in Fig. 1 dargestellt, sind hier drei Abschnitte eines Kiefers 18a, 18b, 18c - vorliegend eines Unterkiefers - mit der Trägerplatte 12 verbunden. Es handelt es sich bei den Abschnitten 18a, 18b, 18c jeweils um einen Sextant des Kiefers. Die Abschnitte des Kiefers 18a, 18b, 18c weisen jeweils zweite Befestigungsmittel 20 auf, welche korrespondierend zu den ersten Befestigungsmitteln 14 ausgebildet sind. Vorliegend sind die zweiten Befestigungsmittels 20 in Form von trapezförmigen Vorsprüngen 22 an den Innenseiten der Abschnitte der Kiefer 18a, 18b, 18c ausgebildet und können entsprechend von der Unterseite der Trägerplatte 12 aus in die jeweiligen Aussparungen 16 eingeführt und in diesen aufgenommen werden. Die Abschnitte der Kiefer 18a, 18b, 18c sind dann gegenüber einem seitlichen Herausziehen formschlüssig in der Trägerplatte 12 fixiert.

Weiterhin weist das Übungsmodell 10 eine Bodenplatte 24 auf. Die Bodenplatte 24 dient zum einen zur Auflage der Abschnitte des Kiefers 18a, 18b, 18c und zum anderen in Zusammenwirkung mit der Trägerplatte zur Befestigung weiterer, im Folgenden noch beschriebener Komponenten. Die Bodenplatte 24 weist zur Auflage der Abschnitte des Kiefers 18a, 18b, 18c größere Außenmaße auf als die Trägerplatte 12.

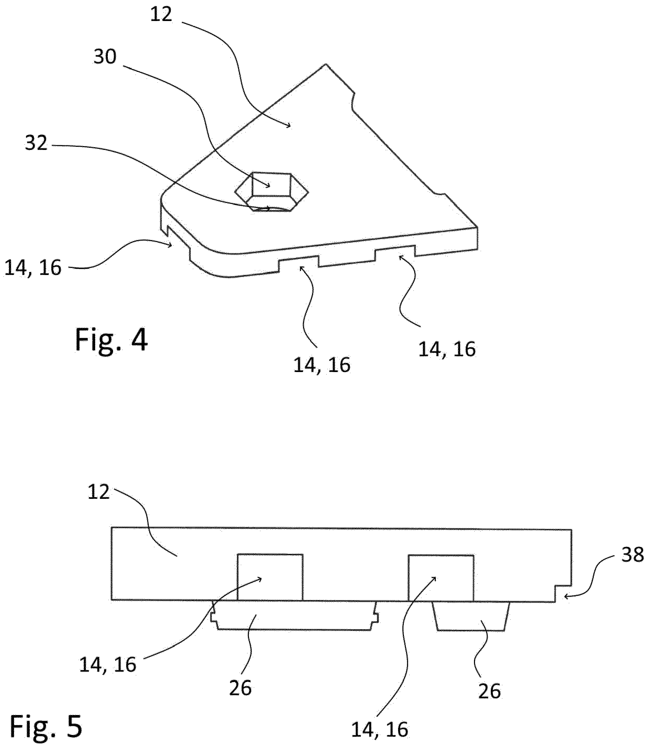

Die Bodenplatte 24 und die Trägerplatte 12 sind in zusammengebautem Zustand des Übungsmodells 10 formschlüssig miteinander verbunden. Dazu weist die Trägerplatte 12 auf ihrer Unterseite zwei, sich nach unten hin verjüngende, zylindrische Vorsprünge 26 auf (vgl. Fig. 3 und Fig. 5), welche in korrespondierende Ausnehmungen 28 in der Bodenplatte 24 eingreifen (vgl. Fig. 1). Die Vorsprünge 26 weisen einen umlaufenden Gummiring (nicht dargestellt) auf, welcher in eine entsprechende Nut (ebenfalls nicht dargestellt) in der Mantelfläche der Ausnehmungen 28 eingreift und durch welche eine formschlüssige, aber lösbare Verbindung zwischen der Trägerplatte 12 und der Bodenplatte 24 in Verbindungsrichtung V bewirkt wird.

Durch die formschlüssige Verbindung zwischen der Trägerplatte 12 und der Bodenplatte 24 werden zudem die Abschnitte des Kiefers 18a, 18b, 18c in Verbindungsrichtung V formschlüssig fixiert.

Auf der Oberseite der Trägerplatte 12 ist eine hexagonale Aussparung 30 ausgebildet. Die hexagonale Aussparung 30 kann dabei zu unterschiedlichen Zwecken dienen.

Zum einen kann in der hexagonalen Aussparung 30 eine Mutter als Gegenstück zu einer Schraube angeordnet werden. Mittels der Schraube wird das Übungsmodell 10 an einem Phantomkopf befestigt. Die Schraube wird sowohl die Bodenplatte 24 als auch die Trägerplatte 12 durchragend angeordnet. Die Schraube durchragt dabei die Ausnehmung 28 in der Bodenplatte 24 und eine Öffnung 32 in der Aussparung 30. Diese Anwendungsmöglichkeit ist in den Figuren nicht dargestellt.

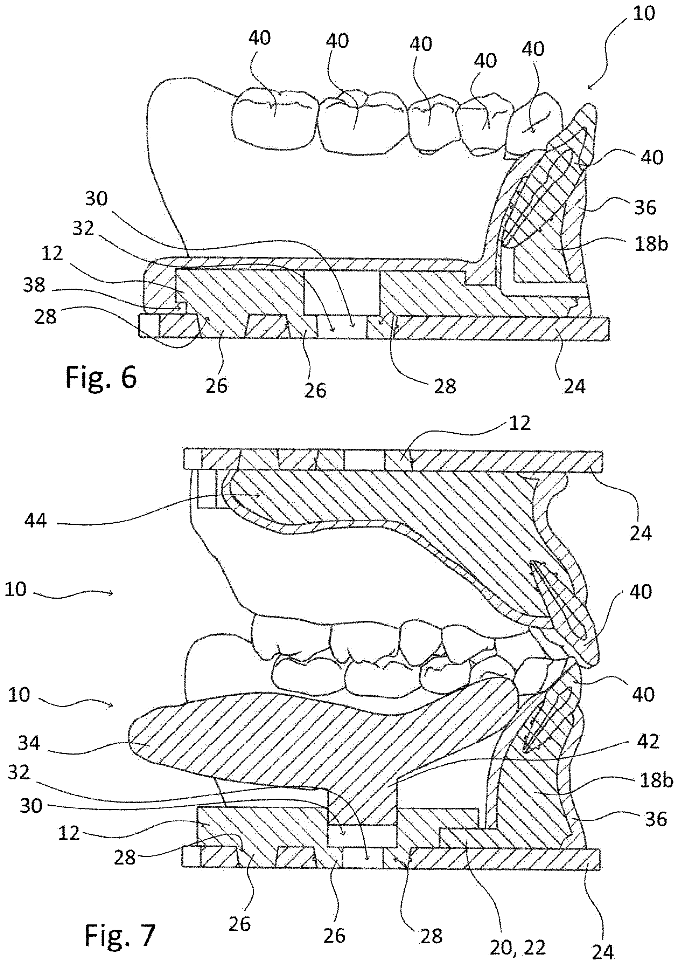

Zum anderen kann die hexagonale Aussparung 30 zur Fixierung einer Zunge 34 mit einem entsprechenden Vorsprung 42 (vgl. Fig 7) oder eines Gaumenteils 44 dienen.

Weiterhin weist das Übungsmodell 10 in der in Fig. 1 gezeigten Ausführungsform eine Zahnfleischauflage 36 auf, welche hier über sämtliche Abschnitte des Kiefers 18a, 18b, 18c gespannt ist. Die Zahnfleischauflage 36 wird in einer Nut bzw. einem Absatz 38 zwischen der Trägerplatte 12 und der Bodenplatte 24 klemmend fixiert (vgl. Fig. 6).

Zudem sind mehrere Zähne 40 in dem Übungsmodell 10 angeordnet. Die Zähne 40 durchragen die Zahnfleischauflage 36 und sind jeweils in einer Öffnung 48 in einem Abschnitt des Kiefers 18a, 18b, 18c befestigt.

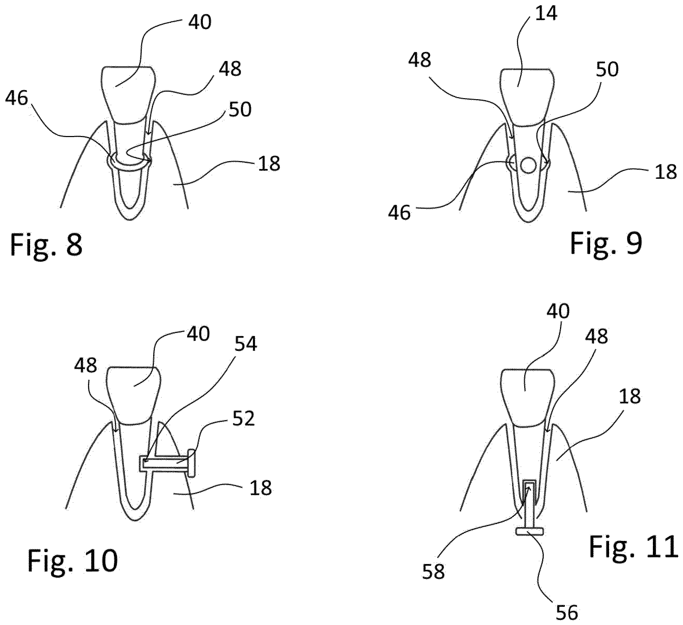

Die verschiedenen Befestigungsarten für die Zähne 40 sind im Folgenden in Zusammenhang mit den Figuren 8 bis 11 beschrieben.

Gemäß einer ersten, in Fig. 8 gezeigten Befestigungsvariante weist der Zahn 40 am Zahnhals eine umlaufende Verdickung 46 auf, welche in einer Nut 50 in einer Öffnung 48 (Zahnfach) im Abschnitt des Kiefers 18 angeordnet ist. Die Verdickung 46 ist elastisch ausgebildet, sodass der Zahn (40) durch einfaches Stecken in dem Abschnitt des Kiefers 18 angeordnet werden kann.

Alternativ kann die Verdickung 46 auch nur abschnittweise über den Umfang des Zahnes 40 verteilt angeordnet sein, wie in Fig. 9 dargestellt.

Die Befestigung eines Zahnes 40 in einem Abschnitt des Kiefers 18 kann auch gemäß der in Fig. 10 dargestellten Variante erfolgen, wobei ein Sperrelement 52, hier ein zylindrischer Bolzen, seitlich durch den Abschnitt des Kiefers 18 in eine Aussparung 54 im Zahn 40 eingeführt wird.

Eine weitere Alternative ist in Fig. 11 dargestellt, wobei hier der Zahn 40 mit einer basalen Schraube 58 in dem Abschnitt des Kiefers 18 befestigt ist. Die Schraube 58 ragt von der Unterseite des Abschnitts des Kiefers 18 in ein dafür vorgesehenes Gewinde 58.

In Fig. 6 ist ein Schnitt durch ein Übungsmodell 10 abgebildet. In dem Schnitt ist die Verbindung der Trägerplatte 12 und der Bodenplatte 24 gut erkennbar, sowie die Anordnung der Zahnfleischauflage 36, welche sich entlang des Abschnittes des Kiefers 18a bis unterhalb des Absatzes 38 in der Trägerplatte 12 erstreckt.

In Fig. 7 ist zudem ein System aus einem unteren, ersten Übungsmodell 10 und einem oberen, zweiten Übungsmodell 10' gezeigt. Das untere Übungsmodell 10 bildet dabei einen Unterkiefer nach und das obere Übungsmodell 10' einen Oberkiefer. Das obere Übungsmodell 10' ist hier nur grob skizziert.

In dem unteren Übungsmodell 10 ist das Modell einer Zunge 34 angeordnet. In dem oberen Übungsmodell 10' ist ein Gaumenanteil 44 angeordnet. Der Gaumenanteil 44 ist analog zur Zunge 34 an der Trägerplatte 12 befestigt.

### Bezugszeichenliste

- 10, 10': modulares Übungsmodell
- 12: Trägerplatte
- 14: erste Befestigungsmittel
- 16: Aussparung (in der Seitenfläche der Trägerplatte)
- 18a, 18b, 18c: Abschnitt des Kiefers
- 20: zweite Befestigungsmittel
- 22: Vorsprung (an dem Abschnitt des Kiefers)
- 24: Bodenplatte
- 26: Vorsprung (an der Unterseite der Trägerplatte)
- 28: Ausnehmung (in der Bodenplatte)
- 30: Aussparung (in der Oberseite der Trägerplatte)
- 32: Öffnung (in der Trägerplatte)
- 34: Zunge
- 36: Zahnfleischauflage
- 38: Absatz, Nut
- 40: Zahn
- 42: Vorsprung (an der Zunge)
- 44: Gaumenanteil
- 46: Verdickung (am Zahn)
- 48: Öffnung, Zahnfach (im Abschnitt des Kiefers)
- 50: Nut
- 52: Sperrelement
- 54: Aussparung (im Zahn)
- 56: Schraube
- 58: Gewinde

## Patentansprüche

1. Modulares Übungsmodell (10, 10') zum Erlernen von zahnmedizinischen Fertigkeiten umfassend
- eine Trägerplatte (12) mit ersten Befestigungsmitteln (14) zur Befestigung mindestens eines Abschnitts eines Kiefers (18a, 18b, 18c),
- eine Bodenplatte (24) zur Auflage des mindestens einen Abschnittes des Kiefers (18a, 18b, 18c),
**dadurch gekennzeichnet, dass** das modulare Übungsmodell (10, 10') ferner umfasst
- mindestens einen Abschnitt des Kiefers (18a, 18b, 18c) mit zu den ersten Befestigungsmitteln (14) korrespondierenden zweiten Befestigungsmitteln (20) zur Befestigung des Abschnitts des Kiefers (18a, 18b, 18c) an der Trägerplatte (12),
- wobei der mindestens eine Abschnitt des Kiefers (18a, 18b, 18c) mit den zweiten Befestigungsmitteln (20) zwischen der Bodenplatte (24) und der Trägerplatte (12) fixiert ist.

2. Modulares Übungsmodell nach dem vorstehenden Anspruch, **dadurch gekennzeichnet, dass** die Bodenplatte (24) und die Trägerplatte (12) formschlüssig miteinander verbunden sind.

3. Modulares Übungsmodell nach einem der vorstehenden Ansprüche,
**dadurch gekennzeichnet, dass** als erste Befestigungsmittel (14) an den Seitenflächen der Trägerplatte (12) Aussparungen (16) ausgebildet sind und an dem Abschnitt des Kiefers (18a, 18b, 18c) als zweite Befestigungsmittel (20) jeweils dazu korrespondierende Vorsprünge (22) ausgebildet sind, wobei die Vorsprünge (22) in die Aussparungen (16) hineinragend angeordnet sind.

4. Modulares Übungsmodell nach einem der vorstehenden Ansprüche,
**dadurch gekennzeichnet, dass** der Abschnitt des Kiefers (18a, 18b, 18c) ein Quadrant, ein Sextant oder ein vollständiger Kiefer ist.

5. Modulares Übungsmodell nach einem der vorstehenden Ansprüche,
**dadurch gekennzeichnet, dass** das Übungsmodell (10, 10') mindestens eine Zahnfleischauflage (36) für den Abschnitt des Kiefers (18a, 18b, 18c) aufweist, wobei die mindestens eine Zahnfleischauflage (36) zwischen der Bodenplatte (24) und der Trägerplatte (12) klemmend fixiert ist.

6. Modulares Übungsmodell nach einem der vorstehenden Ansprüche,
**dadurch gekennzeichnet, dass** die Oberseite der Trägerplatte (12) eine Aussparung (30) aufweist.

7. Modulares Übungsmodell nach dem vorstehenden Anspruch 6, **dadurch gekennzeichnet, dass** eine Zunge (34) vorgesehen ist, welche in der Aussparung (30) fixiert ist oder ein Gaumenanteil (44) vorgesehen ist, welcher in der Aussparung (30) fixiert ist.

8. Modulares Übungsmodell nach einem der vorstehenden Ansprüche,
**dadurch gekennzeichnet, dass** zudem mindestens ein Zahn (40) vorgesehen ist, welcher innerhalb des mindestens einen Abschnitts des Kiefers (18a, 18b, 18c) fixiert ist, und wobei die Fixierung des mindestens einen Zahns (40) durch mindestens eine der folgenden Varianten erfolgt:
a) der Zahn (40) weist eine Verdickung (46) auf, welche mit einer korrespondierenden Nut (50) in dem Abschnitt des Kiefers (18a, 18b, 18c) zusammenwirkt,
b) der Zahn (40) weist eine Aussparung (54) auf, in welche ein in dem Abschnitt des Kiefers (18a, 18b, 18c) angeordnetes Sperrelement (52) hinein verschiebbar ist,
c) der Zahn (40) ist mit einer basalen Schraube (56) im Abschnitt des Kiefers (18a, 18b, 18c) befestigt.

9. Modulares Übungsmodell nach einem der vorstehenden Ansprüche,
**dadurch gekennzeichnet, dass** ein Abschnitt des Kiefers (18a, 18b, 18c) einen Hohlraum aufweist, der eine Verbindung zu einem Zahnfach (48) umfasst.

10. Anordnung eines modularen Übungsmodells (10, 10') nach einem der vorstehenden Ansprüche 1 bis 9 an einem Phantomkopf, wobei die Bodenplatte (24) und die Trägerplatte (12) gemeinsam mittels eines Fixierungsmittels an dem Phantomkopf befestigt sind.

11. System aus einem ersten modularen Übungsmodell (10) nach Anspruch 1 zur Bildung eines Oberkiefers und einem zweiten modularen Übungsmodell (10') nach Anspruch 1 zur Bildung eines Unterkiefers.

12. Verfahren zum Zusammenbau eines modularen Übungsmodells (10, 10') nach einem der vorstehenden Ansprüche 1 bis 9, wobei an einer Trägerplatte (12) mit ersten Befestigungsmitteln (14) mindestens ein Abschnitt eines Kiefers (18a, 18b, 18c) mit zu den ersten Befestigungsmitteln (14) korrespondierenden zweiten Befestigungsmitteln (20) angeordnet wird und wobei die Trägerplatte (12) mit einer Bodenplatte (24) formschlüssig verbunden wird.

13. Verfahren nach dem vorstehenden Anspruch, **dadurch gekennzeichnet, dass** vor dem Verbinden von Trägerplatte (12) und Bodenplatte (24) der Abschnitt des Kiefers (18a, 18b, 18c) mit einer Zahnfleischauflage (36) überzogen wird und die Zahnfleischauflage (36) durch das Verbinden von Trägerplatte (12) und Bodenplatte (24) zwischen der Trägerplatte (12) und der Bodenplatte (24) klemmend fixiert wird.

14. Verfahren nach dem vorstehenden Anspruch 13, **dadurch gekennzeichnet, dass** in den Abschnitt des Kiefers (18a, 18b, 18c) mindestens ein Zahn (40) und/oder eine Zunge (34) und/oder ein Gaumenanteil (44) eingesetzt und fixiert wird.

15. Verfahren nach einem der beiden vorstehenden Ansprüche 13 und 14, **dadurch gekennzeichnet, dass** der mindestens eine Abschnitt des Kiefers (18a, 18b, 18c), die Zahnfleischauflage (36), der mindestens eine Zahn (40), die Zunge (34) und/oder der Gaumenanteil (44) individuell mittels additiven Fertigungsverfahren hergestellt werden.

## Claims

1. Modular training model (10, 10') for learning dentistry skills, comprising
- a support plate (12) with first fastening means (14) for fastening at least one section of a jaw (18a, 18b, 18c),
- a base plate (24) for supporting the at least one section of the jaw (18a, 18b, 18c),
**characterized in that** the modular training model (10, 10') further comprises
- at least one section of the jaw (18a, 18b, 18c) with second fastening means (20) corresponding to the first fastening means (14) for fastening the section of the jaw (18a, 18b, 18c) to the support plate (12),
- wherein the at least one section of the jaw (18a, 18b, 18c) is fixed between the base plate (24) and the support plate (12) with the second fastening means (20).

2. Modular training model according to the preceding claim, **characterized in that** the base plate (24) and the support plate (12) are positively connected to one another.

3. Modular training model according to one of the preceding claims, **characterized in that** recesses (16) are formed as first fastening means (14) on the side surfaces of the support plate (12), and projections (22) corresponding to each of said recesses are formed as second fastening means (20) on the section of the jaw (18a, 18b, 18c), wherein the projections (22) are arranged to project into the recesses (16).

4. Modular training model according to any one of the preceding claims, **characterized in that** the section of the jaw (18a, 18b, 18c) is a quadrant, a sextant or a complete jaw.

5. Modular training model according to any one of the preceding claims, **characterized in that** the training model (10, 10') has at least one gum pad (36) for the section of the jaw (18a, 18b, 18c), wherein the at least one gum pad (36) is fixed in clamping manner between the base plate (24) and the support plate (12).

6. Modular training model according to any one of the preceding claims, **characterized in that** the upper side of the support plate (12) has a recess (30).

7. Modular training model according to the preceding claim 6, **characterized in that** a tongue (34) is provided, which is fixed in the recess (30), or a palate portion (44) is provided, which is fixed in the recess (30).

8. Modular training model according to any one of the preceding claims, **characterized in that** at least one tooth (40) is also provided, which is fixed within the at least one section of the jaw (18a, 18b, 18c), and wherein the at least one tooth (40) is fixed by at least one of the following variants:
a) the tooth (40) has a thickened portion (46) which interacts with a corresponding groove (50) in the section of the jaw (18a, 18b, 18c),
b) the tooth (40) has a recess (54) into which a locking element (52) arranged in the section of the jaw (18a, 18b, 18c) can be pushed,
c) the tooth (40) is fastened in the section of the jaw (18a, 18b, 18c) with a basal screw (56).

9. Modular training model according to any one of the preceding claims, **characterized in that** a section of the jaw (18a, 18b, 18c) has a cavity which surrounds a connection to a tooth socket (48).

10. Arrangement of a modular training model (10, 10') according to any one of the preceding claims 1 to 9 on a phantom head, wherein the base plate (24) and the support plate (12) are jointly fastened to the phantom head by means of a fixing means.

11. System consisting of a first modular training model (10) according to Claim 1 for forming an upper jaw, and a second modular training model (10') according to Claim 1 for forming a lower jaw.

12. Method for assembling a modular training model (10, 10') according to any one of the preceding Claims 1 to 9, wherein at least one section of a jaw (18a, 18b, 18c) is arranged with second fastening means (20) that correspond to first fastening means (14) on a support plate (12) which includes the first fastening means (14), and wherein the support plate (12) is positively connected to a base plate (24).

13. Method according to the preceding claim, **characterized in that** the section of the jaw (18a, 18b, 18c) is covered with a gum pad (36) before the support plate (12) and the base plate (24) are connected, and the gum pad (36) is fixed in clamping manner between the support plate (12) and the base plate (24) by the connection of the support plate (12) to the base plate (24).

14. Method according to the preceding Claim 13, **characterized in that** at least one tooth (40) and/or a tongue (34) and/or a palate portion (44) is inserted and fixed in the section of the jaw (18a, 18b, 18c).

15. Method according to either of the two preceding Claims 13 and 14, **characterized in that** the at least one section of the jaw (18a, 18b, 18c), the gum pad (36), the at least one tooth (40), the tongue (34) and/or the palate portion (44) are produced individually using additive manufacturing processes.

## Revendications

1. Module d'exercice modulaire (10, 10') pour l'apprentissage de compétences en médecine dentaire, comprenant
- une plaque porteuse (12) dotée de premiers moyen de fixation (14) pour la fixation d'au moins une section d'une mâchoire (18a, 18b, 18c),
- une plaque de fond (24) pour l'appui de l'au moins une section de la mâchoire (18a, 18b, 18c),
**caractérisé en ce que** le module d'exercice modulaire (10, 10') comprend en outre
- au moins une section de la mâchoire (18a, 18b, 18c) avec des seconds moyens de fixation (20) correspondant aux premiers moyens de fixation (14) pour la fixation de la section de la mâchoire (18a, 18b, 18c) à la plaque porteuse (12),
- l'au moins une section de la mâchoire (18a, 18b, 18c) étant fixée avec les seconds moyens de fixation (20) entre la plaque de fond (24) et la plaque porteuse (12).

2. Module d'exercice modulaire selon la revendication précédente, **caractérisé en ce que** la plaque de fond (24) et la plaque porteuse (12) sont connectées entre elles en correspondance géométrique.

3. Module d'exercice modulaire selon une des revendications précédentes, **caractérisé en ce que**, en tant que premiers moyens de fixation (14), des échancrures (16) sont pratiquées au niveau des surfaces latérales de la plaque porteuse (12) et que, en tant que seconds moyens de fixation (20), des saillies (22) leur correspondant sont respectivement constituées, les saillies (22) étant disposées de manière à rentrer dans les échancrures (16).

4. Module d'exercice modulaire selon une des revendications précédentes, **caractérisé en ce que** la section de la mâchoire (18a, 18b, 18c) est un quadrant, un sextant ou une mâchoire complète.

5. Module d'exercice modulaire selon une des revendications précédentes, **caractérisé en ce que** le module d'exercice (10, 10') présente au moins une gencive de garniture (36) pour la section de la mâchoire (18a, 18b, 18c), l'au moins une gencive de garniture (36) étant disposée entre la plaque de fond (24) et la plaque porteuse (12) en étant bloquée.

6. Module d'exercice modulaire selon une des revendications précédentes, **caractérisé en ce que** la face supérieure de la plaque porteuse (12) présente une échancrure (30).

7. Module d'exercice modulaire selon la revendication précédente 6, **caractérisé en ce qu'**il est prévu une langue (34) qui est fixée dans l'échancrure (30) ou qu'il est prévu une partie palatale (44) qui est fixée dans l'échancrure (30).

8. Module d'exercice modulaire selon des revendications précédentes, **caractérisé en ce qu'**il est prévu en outre au moins une dent (40) qui est fixée à l'intérieur de l'au moins une section de la mâchoire (18a, 18b, 18c), la fixation de l'au moins une dent (40) étant effectuée par au moins une des variantes suivantes :
a) la dent (40) présente un épaississement (46) qui coopère avec une rainure correspondante (50) dans la section de la mâchoire (18a, 18b, 18c),
b) la dent (40) présente une échancrure (54) dans laquelle un élément de barrage (52) disposé dans la section de la mâchoire (18a, 18b, 18c) peut être glissé,
c) la dent (40) est fixée à l'aide d'une vis basale (56) dans la section de la mâchoire (18a, 18b, 18c).

9. Module d'exercice modulaire selon une des revendications précédentes, **caractérisé en ce qu'**une section de la mâchoire (18a, 18b, 18c) présente une cavité et comprend une connexion avec une alvéole dentaire (48).

10. Disposition d'un module d'exercice modulaire (10, 10') selon une des revendications précédentes 1 à 9 sur une tête factice, la plaque de fond (24) et la plaque porteuse (12) étant fixées ensemble au moyen d'un moyen de fixation à la tête factice.

11. Système composé d'un module d'exercice modulaire (10) selon la revendication 1 pour la formation d'un maxillaire supérieur et d'un second modèle d'exercice modulaire (10') selon la revendication 1 pour la formation d'un maxillaire inférieur.

12. Procédé d'assemblage d'un module d'exercice modulaire (10, 10') selon une des revendications précédentes 1 à 9, dans lequel, sur une plaque porteuse (12) dotée de premiers moyens de fixation (14), au moins une section d'une mâchoire (18a, 18b, 18c) est disposée avec des seconds moyens de fixation (20) correspondant aux premiers moyens de fixation (14) et la plaque porteuse (12) est connectée en correspondance géométrique avec une plaque de fond (24).

13. Procédé selon la revendication précédente, **caractérisé en ce que**, avant la connexion de la plaque porteuse (12) et de la plaque de fond (24), la section de mâchoire (18a, 18b, 18c) est recouverte d'une gencive de garniture (36) et la gencive de garniture (36) est fixée en la bloquant par la connexion de la plaque porteuse (12) et de la plaque de fond (24) entre la plaque porteuse (12) et la plaque de fond (24).

14. Procédé selon la revendication précédente 13, **caractérisé en ce que**, dans la section de la mâchoire (18a, 18b, 18c), au moins une dent (40) et/ou une langue (34) et/ou une partie palatale (44) est insérée et fixée.

15. Procédé selon une des deux revendications précédentes 13 et 14, **caractérisé en ce que** l'au moins une section de la mâchoire (18a, 18b, 18c), la gencive de garniture (36), l'au moins une dent (40), la langue (34) et/ou la partie palatale (44) sont fabriquées individuellement au moyen de procédés de fabrication additifs.
